# EUROPEAN PATENT APPLICATION

(11) **EP 2 874 110 A1**
(43) Date of publication of application: **20.05.2015**
(21) Application number: 13382463.1
(22) Date of filing: 15.11.2013
(51) Int. Cl.: G06Q 10/10, G10L 17/26

(54) **A method and a system to obtain data from voice analysis in a communication and computer programs products thereof**

(71) Applicant: Telefonica Digital España, S.L.U., 28013 Madrid (ES)
(72) Inventor: Neystadt, John, 44471 Kfar-Saba (IL); Asadurian, Marat, 28013 Madrid (ES); Luque, Jordi, 28013 Madrid (ES); Anguera Miro, Xavier, 28013 Madrid (ES)
(74) Representative: Carlos Hernando, Borja

(57) **Abstract**

The method comprising: requesting, by a calling user, to perform a voice communication with a called user through a communication service, sending the latter voice stream generated in the communication to a voice analysis unit; said voice analysis unit, upon said communication matching a restriction criteria based on keywords and a segmentation for said keywords specified by a query manager and stored in a query database, analysing content of said received voice stream to capture data by spotting by means of using a keyword analyser at least one keyword spoken by any of said users in said communication matching said restriction criteria and by detecting by means of using an intonation analyser said captured data to indicate an emotional state of the caller user and/or of the called user when said at least one keyword is spotted in the communication.

## Description

### Field of the invention

Present invention generally relates to the field of speech emotion analysis, and more particularly to a method, system and computer program products to obtain data from voice analysis in a communication.

### Background of the invention

Technologies of voice intonation analysis have recently emerged. They enable measuring of aggressiveness, worriedness and other qualities of the voice, and can evaluate the attitude of the speaker regarding discussed issue. There do exist telecommunications services and systems utilising voice intonation analysis to provide additional information to users. Information on caller's moods may be obtained from the intonation analysis and stored for later retrieval with information on the calls, including audio data, to which the information relates. Companies such as *NICE, Verint, Exaudios, Nemesysco and Beyondverbal* offer examples of commercial products based on emotion detection within voice technologies.

There are some developments in speech processing which have been targeted to the identification of specific details in the speech. Also, word-spotting technologies offer more advanced functionality, allowing the identification of specific words or simple patterns uttered in speech. Keyword spotting is a subfield in voice recognition theme, vastly researched and implemented by many companies such as *NICE, Verint or Nuance.*

As the Internet continued to develop and websites became more interactive, data collection and analysis became more commonplace for those Marketing Research Firms whose clients had a web presence. Gathering data for market research is common practice in many companies with big a user base like *Facebook, Google or Amazon.* Having access to web data did not automatically provide companies with the rationale behind the behaviour of users visiting their sites, which provoked the marketing research industry to develop new and better ways of tracking, collecting and interpreting information. This led to the development of various tools like online focus groups and pop-up or website intercept surveys. These types of services allowed companies to dig deeper into the motivations of consumers, augmenting their insights and utilizing this data to drive market share.

As information around the world became more accessible, increased competition led companies to demand more of Market Researchers. It was no longer sufficient to follow trends in web behaviour or track sales data. This meant the Marketing Research Industry, again, needed to adapt to the rapidly changing needs of the marketplace, and to the demands of companies looking for a competitive edge.

### Summary of the Invention

To overcome the above and other problems, this present invention describes a usage of voice intonation analysis technology combined with keyword spotting, in order to gather anonymous information related to brand research, which may be used for marketing purposes, among others.

Therefore, according to a first aspect there is provided a method to obtain data from voice analysis in a communication, comprising as commonly in the field: a) requesting, by a calling user computing device, to perform a voice communication with a called user computing device through a communication service; b) upon said communication being accepted by the called user, sending, keeping identity of said users anonymous, by said communication service, voice stream generated in the communication to a voice analysis unit; and c) analysing, by said voice analysis unit, content of said received voice stream to indicate emotional state information of the caller user and/or of the called user.

On contrary to the known proposals, the method of the first aspect comprises performing said step c) upon said communication matching a restriction criteria based on keywords and segmentation for said keywords specified by a query manager and stored in a query database, and wherein it comprises: spotting by means of a keyword analyser at least one keyword spoken by any of said users in said communication matching said restriction criteria; and detecting by means of an intonation analyser said captured data to indicate said emotional state of the caller user and/or of the called user when said at least one keyword is spotted in the communication.

The at least one spotted keyword and the emotional state are further send and stored in a remote database server.

The communication service such as a traditional ptsn/SS7 protocol, a VoIP SIP call or any other similar protocol, may duplicate the voice stream generated in the communication by each of said users and may sent the duplication to said voice analysis unit. Alternatively, the communication service may use voice analysis unit as a media gateway and send the voice stream through it. In both options the content of said voice stream can be stored in the voice analysis unit a certain period of time; communication doesn't need to be permanently stored on the voice analysis unit. It is also possible that the voice stream only passes through the voice analysis unit for analysis without being stored. Voice analysis unit may use in-memory buffers or temporary disk files to store some of said content.

In an embodiment, both keyword spotting and emotional detection precision can be improved with an automatic training technique. For instance, the voice analysis unit may extract phoneme lattices or assign aptitude to communication emotions when said at least one keyword is spoken by any of said users, caller or called, more than one time in at least said communication.

In an embodiment, the restriction criteria include location and/or user profiling data including socio-demographic information of the caller user and/or of the called user.

According to a second aspect there is provided a system to obtain data from voice analysis in a communication, comprising as commonly known: a calling user computing device requesting to perform a voice communication with a called user computing device through a communication service; said communication service sending, once said communication being accepted by the called user, voice stream generated in the communication to a voice analysis unit; and a voice analysis unit analysing content of said received voice stream to indicate emotional state information of the caller user and/or of the called user.

On contrary to the known proposals, the system of the second aspect comprises: a query manager that specifies, prior to perform said communication, a restriction criteria based on keywords and on a segmentation for said keywords; a query database that stores said specified restriction criteria; a keyword analyser that spots at least one keyword spoken by any of said users in said communication matching said restriction criteria; and a intonation analyser that detects said captured data to indicate said emotional state of the caller user and/or of the called user when said at least one keyword is spotted.

The system of the second aspect may further include a remote database server that receives and stores said at least one spotted keyword and said emotional state.

In an embodiment, the voice analysis unit is configured to work as a media gateway. Moreover, the voice analysis unit can also include means for storing during a certain period of time the analysed content of said receive voice stream.

The subject matter described herein can be implemented in software in combination with hardware and/or firmware, or a suitable combination of them. For example, the subject matter described herein can be implemented in software executed by a processor.

According to a further aspect, there is provided a computer program product having computer-executable instructions adapted to perform all the steps of claim 1 when said computer-executable instructions run on a computer device.

Furthermore, in an embodiment, the computer-executable instructions are further adapted to perform the steps of claim 2 when said computer-executable instructions run on said computer device.

### Brief Description of the Drawings

The previous and other advantages and features will be more fully understood from the following detailed description of embodiments, with reference to the attached, which must be considered in an illustrative and non-limiting manner, in which:
Fig. 1 is an illustration of the voice intonation analysis mechanism proposed by the present invention according to different embodiments.
Fig. 2 is an illustration of a method that can be executed by a keyword analyser.
Fig. 3 is an illustration of a method that can be executed by an intonation and emotion analyser.

### Detailed Description of Several Embodiments

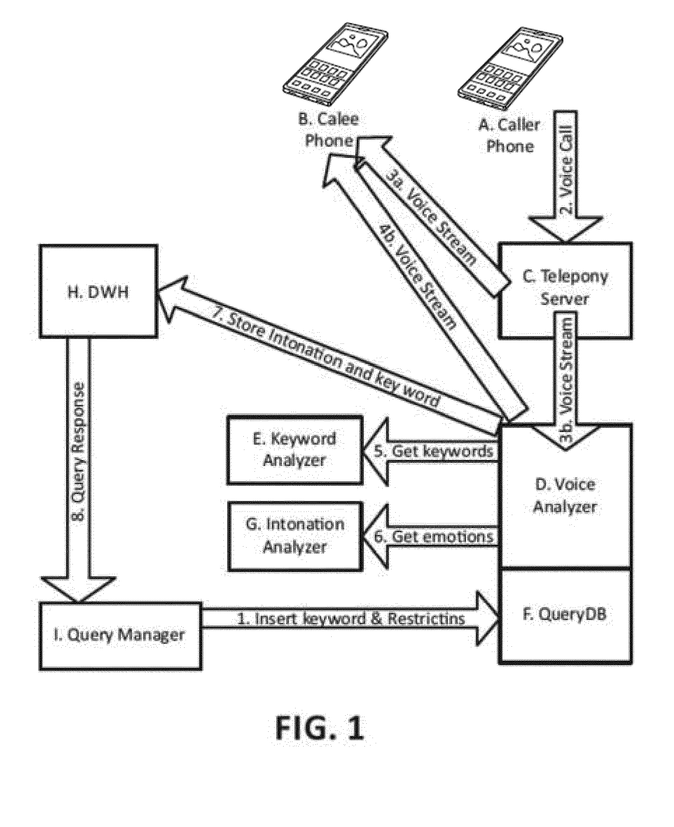

In reference to Fig. 1 it is illustrated the proposed voice intonation analysis mechanism. For instance, regarding Fig. 1, a Query Manager I would like to measure user attitude towards specified questions, such as " "Coca-Cola", "Barak Obama", "Volkswagen golf" and may want optionally restrict it to certain segments of the population, by socio-demographic (male, > 20 < 40, ethnicity=French) or other profiles as well as user location. So, Query Manager will insert 1 specified keywords and required segmentation for said keywords (use profile fields, restricting location and proximity) to a Query DB F.

A caller user A, by means of a calling user computing device such as an smartphone or a mobile phone, among any other, requests to perform a voice communication or voice call with a called user B, through a communication service C such as traditional pstn/SS7, a Voip SIP call or any other protocol.

The communication service C which may comprise a networked server configured to facilitate communication between the caller user A and the called user B may duplicate the voice streams generated in the communication both from the caller and from the called users 3a and will stream the duplication 3b to a voice analysis unit D. The voice analysis unit D may comprise a networked server in communication with the communication service C.

Alternatively, the communication service C can use the voice analysis unit D as a media gateway and stream all media through it 4b.

In both options, voice communication need not be permanently stored on the voice analysis unit C, and only pass it for analysis. Voice analysis unit C may use in-memory buffers or temporary disk files to store some of the media packets.

Then, for the voice communication matching restrictions specified by said Query Manager I, such as location or user profile, voice analysis unit D will analyse content of said received voice stream by: a. spotting keywords 5 from a keyword pool stored in a keywords DB, not illustrated, using one of known keyword analyser methods E, such as one described in Appendix I; and b. detecting emotions 6 using intonation and energy one of the known methods for intonation analysis G, such as one described in Appendix II.

In an embodiment, both keyword spotting and emotion detection precision can optionally be improved with an automatic training mechanism. For instance, when a user of said voice communication speaks or expresses one of said keywords more than one time, the voice analysis unit D may refine the model by extracting phoneme lattices or assigning aptitude to communication emotions. Moreover, voice analysis unit D can use a user-id to accumulate multiple voice communications performed by a same user and use it for automatic model generation.

For each communication, voice analysis unit D may produce an event 7, with one or more keywords that were spotted, matching profile and context information (location, gender, etc.) and emotion quotient measured around matched point of the communication from prior a configurable time period (such as 15 seconds) to a remote database server or DWH H.

DWH database H will keep matched events and associated contextual information (emotion, location, matched user-profile attributes) to produce information answering questions and enabling the use of existing analysis methods, such OLAP with multi-dimensional queries.

In an embodiment, an actual analysis or reporting can produce answers, such as: Keyword: "Barak Obama"
i. Positive - 5%
   1. French 20%, English 80%
   2. Male 55%, Female - 45%
ii. London
   1. Positive - 30%
   2. Negative - 70%

### Appendix I. Keyword spotting:

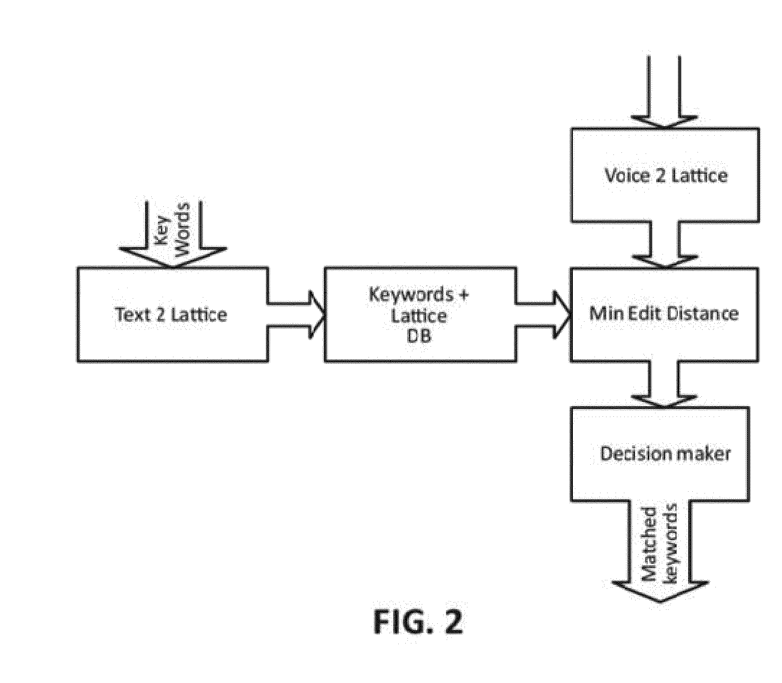

In literature Keyword spotting also known as Spoken term detection (STD) and is well known and researched field of speech recognition theme. Hereby here it will be described one of the methods, as illustrated in Fig. 2, used to spot keyword in spoken voice:
1. When BI Authority inserts key word to DB
   a. Convert Text to Phoneme Lattice
   b. Store in DB text with Phoneme Lattice
2. Convert voice to Phoneme Lattice Graph.
3. Compute Min Edit distance of Voice Lattice with Key word Lattice
4. Make decision: if distance < threshold, keyword spotted.
5. Return all keywords spotted.

### Appendix II. Intonation and emotion analysis

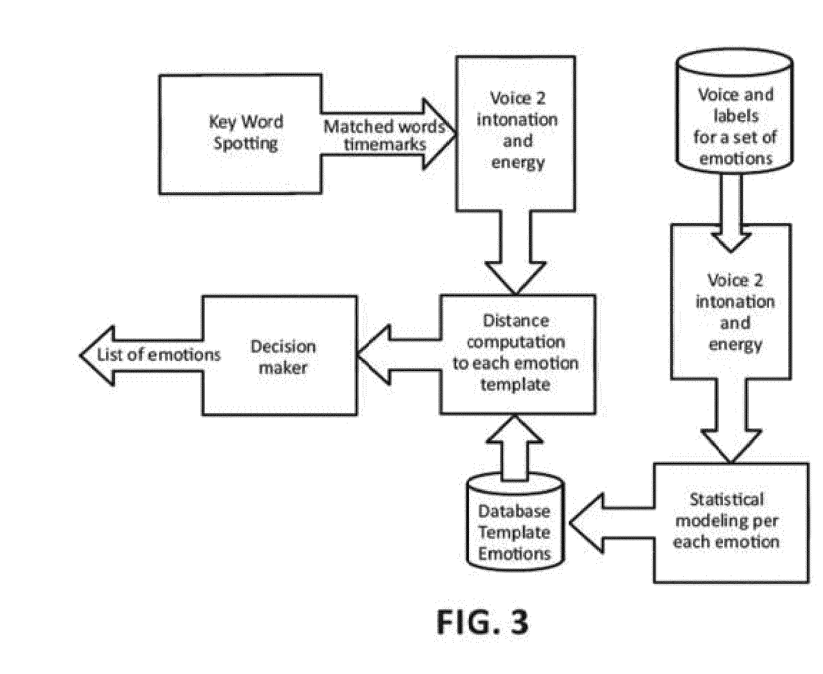

Detection of emotions conveyed in speech is an open field of research for those working on sentiment analysis and speech analytics. It will be described one of the methods, as seen in Fig. 3, used to detect emotion in spoken voice:
1. Build a model up per each emotion based on a labelled voice database.
   a. Extract intonation and energy parameters from voice.
   b. Construct a template which summarizes previous statistics and store in DB.
2. When audio mining has been performed, that is, keyword spotting return all keywords spotted: a. Extract intonation and energy (v) around matched words based on timestamps provided by keyword spotting module.
2. Make decision: min {distance (v, template_i)} for each i=1,..,#emotions, select such emotion template as the most likely emotion.
3. Return emotion, level and confidence associated with each word spotted.

The proposed method described herein may be performed by software in machine readable form on a tangible storage medium e.g. in the form of a computer program product comprising computer program code means adapted to perform all the steps of the proposed method when the program is run on a computer and where the computer program may be embodied on a computer readable medium.

Examples of tangible (or non-transitory) storage media include disks, thumb drives, memory cards etc. and do not include propagated signals. The software can be suitable for execution on a parallel processor or a serial processor such that the method steps may be carried out in any suitable order, or simultaneously.

This acknowledges that firmware and software can be valuable, separately tradable commodities. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

The preferred features may be combined as appropriate, as would be apparent to a skilled person, and may be combined with any of the aspects of the invention.

The scope of the present invention is defined in the following set of claims.

## Claims

1. A method to obtain data from voice analysis in a communication, comprising.
a) requesting, by a calling user computing device (A), to perform a voice communication with a called user computing device (B) through a communication service (C);
b) upon said communication being accepted by the called user, sending, by said communication service (C), voice stream generated in the communication to a voice analysis unit (D); and
c) analysing, by said voice analysis unit (D), content of said received voice stream to capture data indicating emotional state of the caller user and/or of the called user,
wherein the method is **characterized in that** said step c) is performed upon said communication matching a restriction criteria based on keywords and a segmentation for said keywords specified by a query manager (I) and stored in a query database (F), and wherein it comprises:
- spotting by means of using a keyword analyser (E) at least one keyword spoken by any of said users in said communication matching said restriction criteria;
and
- detecting by means of using an intonation analyser (G) said captured data to indicate said emotional state of the caller user and/or of the called user when said at least one keyword is spotted in the communication.

2. A method according to claim 1, wherein said at least one spotted keyword and said captured data indicating emotional state are further send and stored in a remote database server (H).

3. A method according to claim 1, wherein in said step b) the voice stream generated in the communication by each of said users is sent duplicated to said voice analysis unit (D).

4. A method according to claim 1, wherein said communication service (C) uses said voice analysis unit (D) as a media gateway for sending the voice stream through the voice analysis unit (D).

5. A method according to any of previous claims 3 or 4, wherein said voice analysis unit (D) stores the analysed content of said received voice stream a certain period of time.

6. A method according to previous claims, comprising, by said voice analysis unit (D), extracting phoneme lattices or assigning aptitude to communication emotions if said at least one keyword is spoken by any of said users a plurality of times in at least said communication.

7. A method according to claim 1, wherein said restriction criteria at least comprises location and/or user profiling data including socio-demographic information of the caller user and/or of the called user.

8. A method according to claim 1, wherein said communication service (C) comprises at least a PSTN/SS7 protocol or a VoIP SIP call.

9. A method according to claim 1, wherein said voice stream generated in the communication and send to said voice analysis unit (D) is kept anonymous.

10. A system to obtain data from voice analysis in a communication, comprising.
- a calling user computing device (A) requesting to perform a voice communication with a called user computing device (B) through a communication service (C);
- said communication service (C) sending, once said communication being accepted by the called user, voice stream generated in the communication to a voice analysis unit (D); and
- a voice analysis unit (D) analysing content of said received voice stream to capture data indicating emotional state of the caller user and/or of the called user, the system being **characterized in that** further comprises:
- a query manager (I) that specifies, prior to perform said communication, a restriction criteria based on keywords and on a segmentation for said keywords;
- a query database (F) that stores said specified restriction criteria;
- a keyword analyser (E) that spots at least one keyword spoken by any of said users in said communication matching said restriction criteria; and
- a intonation analyser (G) that detects said captured data to indicate said emotional state of the caller user and/or of the called user when said at least one keyword is spotted.

11. A system according to claim 10, further comprising a remote database server (H) that receives and stores said at least one spotted keyword and said captured data.

12. A system according to claim 10, wherein said voice analysis unit (D) is configured to work as a media gateway.

13. A system according to claim 10 or 12, wherein said voice analysis unit (D) comprises means configured to store the analysed content of said received voice stream.

14. A computer program product having computer-executable instructions adapted to perform all the steps of claim 1 when said computer-executable instructions run on a computer device.

15. A computer program product according to claim 14, wherein said computer-executable instructions are further adapted to perform the steps of claim 2 when said computer-executable instructions run on said computer device.
